# FASCICULE DE BREVET EUROPEEN

(11) **EP 4 056 829 B1**
(45) Date de publication et mention de la délivrance du brevet: **28.08.2024**
(21) Numéro de dépôt: 22160571.0
(22) Date de dépôt: 07.03.2022
(51) Int. Cl.: F02C 7/36, F16H 57/04, F16C 17/02, F16C 33/10

(54) **REFROIDISSEMENT DE PIGNONS D'UN RÉDUCTEUR MÉCANIQUE D'UNE TURBOMACHINE**
KÜHLUNG VON ZAHNRÄDERN EINES UNTERSETZUNGSGETRIEBES EINES TURBINENTRIEBWERKS
COOLING OF PINIONS OF A REDUCTION GEAR OF A TURBINE ENGINE

(30) Priorité: 10.03.2021 FR 2102320
(43) Date de publication de la demande: 14.09.2022
(73) Titulaire: Safran Transmission Systems, 92700 Colombes (FR)
(72) Inventeur: PAP, Bálint, 77500 Moissy-Cramayel (FR); AOUN, Lilia, 77500 Moissy-Cramayel (FR); PENNACINO, Antoine Jacques Marie, 77500 Moissy-Cramayel (FR)
(74) Mandataire: Regimbeau

(56) Documents cités:
- EP-A1- 3 477 158
- CN-A- 104 006 121
- CN-U- 202 812 113
- FR-A1- 2 987 416
- JP-U- S5 837 994
- US-A1- 2015 260 274

## Description

### DOMAINE DE L'INVENTION

La présente invention concerne le domaine des réducteurs de vitesse à train épicycloïdal pour turboréacteur, en particulier d'aéronef, et plus particulièrement le refroidissement des pignons de tels réducteurs.

### ETAT DE LA TECHNIQUE

L'état de l'art comprend notamment les documents WO2010/092263, FR2987416 et FR3041054.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (« fan » en anglais). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne (ou jante) et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont généralement de type planétaire ou épicycloïdal. Il existe également des architectures dites différentielles ou compound. Dans un réducteur planétaire, le porte-satellites est fixe et la couronne est raccordée à l'arbre de sortie du dispositif qui tourne dans le sens inverse du solaire. Dans un réducteur épicycloïdal, la couronne est fixe et le porte-satellites est raccordé à l'arbre de sortie du dispositif qui tourne dans le même sens que le solaire. Dans un réducteur différentiel, aucune pièce d'engrènement n'est fixée en rotation. La couronne tourne dans le sens contraire du solaire et du porte-satellites.

Toutefois, dans de tels réducteurs, la masse des satellites peut être élevée. Dans le cas d'un réducteur épicycloïdal, cette masse chargeant directement le palier (qu'il s'agisse d'un palier hydrodynamique ou un palier à éléments roulants) qui supporte le satellite, ce qui réduit la durée de vie du réducteur mécanique. De plus, le réducteur mécanique doit être lubrifié afin de refroidir les pièces chaudes qui le composent. C'est notamment le cas des satellites qui sont non seulement chauffés par leur environnement extérieur en raison de leurs frottements avec le solaire et la couronne mais également depuis l'intérieur par leur palier, que ce soit par cisaillement d'huile dans le cas d'un palier lisse ou par frottement dans le cas d'un palier à éléments roulants. Or, cet échauffement du réducteur mécanique a pour conséquence de réduire la marge au grippage du réducteur mécanique et de limiter la capacité de charge du palier lisse ou la durée de vie des roulements.

Le document CN 104 006 121 A divulgue une transmission épicycloïdale comprenant un corps de transmission, une pluralité d'ensembles planétaires, une pluralité de solaires et une pluralité de couronnes planétaires. Les roues planétaires sont pourvues d'une entrée d'huile à travers des trous dans la direction radiale.

Le document US 2015/260274 A1 divulgue un hélicoptère comprenant un train d'engrenages transmettant le couple d'un moteur à un rotor, ainsi qu'un système de lubrification secondaire disposé dans un engrenage du train d'engrenages, permettant d'alimenter le train d'engrenages en lubrifiant suite à une défaillance du système de lubrification primaire.

Le document FR 2 987 416 divulgue un dispositif d'alimentation en huile d'un ensemble de pignons engrenant les uns sur les autres, comprenant une canalisation fixe et des canalisations d'acheminement mobiles en rotation autour de l'axe de rotation commun de l'ensemble de pignons.

Le document EP 3 477 158 divulgue un engrenage comprenant des dents dans lesquelles sont formées des cavités, les cavités étant en communication fluidique avec une alimentation en lubrifiant.

### EXPOSE DE L'INVENTION

Un but de l'invention est de remédier aux inconvénients précités, en proposant un réducteur mécanique pour une turbomachine dont la marge au grippage est améliorée.

Un autre but de l'invention est d'améliorer la durée de vie des paliers des satellites, et en particulier d'augmenter leur capacité de charge dans le cas de paliers lisses.

Selon l'invention, il est à cet effet proposé un réducteur mécanique conforme à la revendication 1, une turbomachine conforme à la revendication 9 et un aéronef conforme à la revendication 10.

Des modes de réalisation du réducteur mécanique sont définis dans les revendications dépendantes.

Ainsi, il est proposé, selon un premier aspect, un réducteur mécanique pour une turbomachine configuré pour entrainer une soufflante autour d'un axe de rotation et un stator, le réducteur mécanique étant configuré pour être monté fixement par rapport au stator de la turbomachine et comprenant une pluralité de pièces d'engrènement, lesdites pièces d'engrènement comprenant :
- un solaire, centré sur un axe principal du réducteur mécanique,
- une couronne, centrée sur l'axe principal du réducteur mécanique, et
- au moins trois satellites configurés pour coopérer avec le pignon solaire et la couronne,
chaque pièce d'engrènement présentant une face amont et une face aval chacune perpendiculaire à l'axe principal et une face radiale externe qui relie la face amont et la face aval et qui s'étend circonférentiellement autour de l'axe principal.

De plus, au moins une pièce d'engrènement du réducteur mécanique qui est mobile en rotation par rapport au stator comprend un premier canal débouchant dans l'une parmi la face amont et la face aval de la pièce d'engrènement et un deuxième canal raccordé fluidiquement avec le premier canal et débouchant dans la face radiale externe de la pièce d'engrènement.

Le cas échéant, le premier canal présente par ailleurs une section de passage variable, la section de passage étant plus grande à proximité de l'une parmi la face amont et la face aval qu'à proximité du deuxième canal. En outre, chaque pièce d'engrènement comprend deux rangées de dentures qui sont coaxiales avec l'axe principal et séparées axialement par une rainure annulaire, le deuxième canal débouchant dans la rainure annulaire.

L'au moins une pièce d'engrènement peut comprendre une pluralité de premiers canaux débouchant dans l'une parmi la face amont et la face aval de la pièce d'engrènement et une pluralité de deuxièmes canaux, chaque deuxième canal débouchant dans la face radiale externe de la pièce d'engrènement et étant raccordé fluidiquement avec un premier canal correspondant.

L'au moins une pièce d'engrènement peut comprendre au moins deux premiers canaux décalés radialement par rapport à l'axe principal, un deuxième canal étant raccordé fluidiquement avec les au moins deux premiers canaux.

Les premiers canaux et les deuxièmes canaux peuvent être équirépartis autour de l'axe principal.

Chaque satellite peut comprendre un premier canal et un deuxième canal, de préférence chaque pièce d'engrènement du réducteur mécanique qui est mobile en rotation comprend un premier canal et un deuxième canal.

Le réducteur mécanique peut comprendre en outre un premier canal supplémentaire débouchant dans l'autre parmi la face amont et la face aval, et un deuxième canal supplémentaire débouchant dans la face radiale externe, le deuxième canal supplémentaire étant en communication fluidique avec le premier canal supplémentaire.

Le premier canal peut déboucher à la fois dans la face amont et dans la face aval ; et/ou le premier canal peut s'étendre selon une direction axiale qui est parallèle à l'axe principal, et/ou le deuxième canal peut s'étendre selon une direction radiale à l'axe principal, dans un plan normal à l'axe principal, et peut être incliné suivant une direction tangentielle.

### DESCRIPTION DES FIGURES

La figure 1 illustre de façon schématique un exemple de turbomachine pouvant comprendre un réducteur mécanique conforme à un mode de réalisation de l'invention ;
La figure 2 est une vue en coupe d'un exemple de réalisation d'un réducteur mécanique conforme à un mode de réalisation ;
La figure 3 est une vue en perspective d'un premier exemple de pièce d'engrènement conforme à un mode de réalisation ;
La figure 4 est une vue coupe de la pièce d'engrènement de la figure 3 ;
La figure 5 est une vue en coupe partielle et axiale d'un deuxième autre exemple de pièce d'engrènement conforme à un mode de réalisation, sur laquelle ont été représentés deux formes de réalisation du canal axial ;
La figure 6 est une vue en perspective d'un troisième exemple de pièce d'engrènement conforme à un mode de réalisation ;
La figure 7 est une vue en coupe partielle et axiale d'un quatrième exemple de pièce d'engrènement conforme à un mode de réalisation, sur laquelle ont été représentés deux formes de réalisation du canal radial ; et
La figure 8 est une vue en coupe radiale d'un cinquième exemple de pièce d'engrènement conforme à un mode de réalisation.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz à travers la soufflante S de la turbomachine 1. Par ailleurs, on appelle axe de rotation X l'axe autour duquel tourne la soufflante S et axe principal l'axe autour duquel tourne le solaire 11 du réducteur 10. Dans la présente demande, l'axe de rotation X et l'axe principal sont confondus. Ceci n'est cependant pas limitatif, l'axe de rotation X et l'axe principal pouvant être décalés l'un par rapport à l'autre. La direction axiale correspond à une direction de l'axe X et une direction radiale est une direction perpendiculaire à cet axe et passant par lui. Par ailleurs, la direction tangentielle (ou circonférentielle) correspond à une direction perpendiculaire à l'axe X et à la direction radiale. Sauf précision contraire, interne (respectivement, intérieur) et externe (respectivement, extérieur), respectivement, sont utilisés en référence à une direction radiale de sorte que la partie ou la face interne d'un élément est plus proche de l'axe X que la partie ou la face externe du même élément.

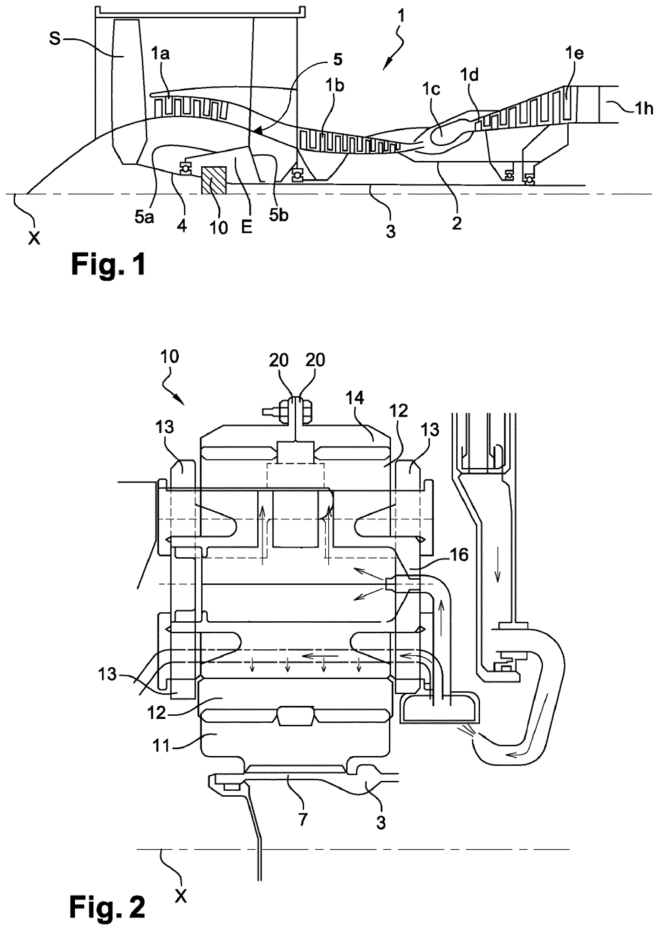

Comme illustré sur la figure 1, une turbomachine 1 à double flux comprend généralement, d'amont en aval dans le sens de l'écoulement des gaz, une soufflante S carénée et logée dans un carter de soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression 1a et un compresseur haute pression 1b, une chambre de combustion 1c, un ou plusieurs étages de turbines, par exemple une turbine haute pression 1d et une turbine basse pression 1e, et une tuyère d'échappement des gaz 1h.

Typiquement, la turbine haute pression 1d entraine en rotation le compresseur haute pression 1b par l'intermédiaire d'un premier arbre 2, dit arbre haute pression, tandis que la turbine basse pression 1e entraine en rotation le compresseur basse pression 1a et la soufflante S par l'intermédiaire d'un deuxième arbre 3, dit arbre basse pression. L'arbre basse pression 3 est généralement logé dans l'arbre haute pression 2.

De façon connue en soi, la turbomachine 1 comprend par ailleurs un carter intermédiaire 5 dont le moyeu est agencé entre le carter du compresseur basse pression 1a et le carter du compresseur haute pression 1b.

Afin d'améliorer le rendement propulsif du turboréacteur 1 et de réduire sa consommation spécifique ainsi que le bruit émis par la soufflante S, la turbomachine présente un taux de dilution (« bypass ratio » en anglais), qui correspond au rapport entre le débit du flux primaire (flux chaud, qui traverse le corps primaire) et le débit du flux secondaire (flux froid) élevé. Par taux de dilution élevé, on comprendra ici un taux de dilution supérieur à 10, par exemple compris entre 12 et 18.

Pour atteindre de tels taux de dilution, un rapport de réduction est introduit entre la vitesse de la soufflante S et celle de la turbine basse pression 1e, permettant ainsi d'ajuster indépendamment leur vitesse de rotation respective. Pour cela, la turbomachine comprend en outre un réducteur mécanique 10, tel qu'un mécanisme de réduction épicycloïdale, planétaire ou différentiel, placé entre l'extrémité amont (par rapport au sens d'écoulement des gaz dans le turboréacteur 1) de l'arbre basse pression 3 et la soufflante S. La soufflante S est alors entrainée par l'arbre basse pression 3 par l'intermédiaire du réducteur 10 et d'un arbre supplémentaire 4, dit arbre de soufflante S, qui est fixé entre le réducteur 10 et le disque de la soufflante S. On réduit ainsi la vitesse de rotation et le rapport de pression de la soufflante S (« fan pressure ratio » en anglais), ce qui permet d'augmenter la puissance extraite par la turbine basse pression 1e.

En référence à la figure 2, qui illustre un exemple de réducteur 10 épicycloïdal, le réducteur 10 comprend une couronne 14 (ou jante) qui est fixée par l'intermédiaire d'un porte-couronne (non représenté) à une partie stator 5a, 5b de la turbomachine avec des moyens souples agencés pour lui permettre de suivre les mouvements éventuels de l'arbre de soufflante 4, dans certains cas de fonctionnement dégradés par exemple.

Le réducteur 10 embraye d'une part sur l'arbre basse pression 3 par l'intermédiaire de cannelures 7 qui entraînent un pignon d'engrenage planétaire ou solaire 11, et d'autre part sur l'arbre de soufflante 4 qui est fixé à un porte-satellites 13. Classiquement, le solaire 11 entraîne une série de pignons de satellites ou satellites 12, qui sont répartis régulièrement sur la circonférence du réducteur 10. Dans l'exemple de réalisation de la figure 1, l'axe de rotation X du solaire est confondu avec celui de la turbomachine. Le nombre de satellites 12 est généralement défini entre trois et sept. Les satellites 12 tournent aussi autour de l'axe X de rotation du solaire 11 en engrenant sur des dentures internes de la couronne 14, qui est fixée au stator 5a, 5b de la turbomachine par l'intermédiaire de brides 20. Chacun des satellites 12 tourne librement autour d'un axe de révolution par l'intermédiaire d'un palier 16 qui peut être lisse, comme représenté sur la figure 2, ou un palier à éléments roulants (roulements à billes ou à rouleaux).

La rotation des satellites 12 autour de leur axe de de révolution, du fait de la coopération de leurs pignons avec les dentures de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre basse pression 3.

Dans un mécanisme épicycloïdal, les satellites 12 et le solaire 11 sont donc mobiles par rapport à la partie stator 5a, 5b de la turbomachine.

On notera que, dans le cas d'un mécanisme planétaire (non illustré sur les figures), le porte-couronne comprend une partie plus ou moins souple qui entraine la couronne 14 et une partie maintenue par des roulements ou des paliers et sur lequel vient se monter la soufflante S. Ces moyens de fixation sont connus de l'homme du métier et ne sont pas détaillés ici. Une brève description peut en être trouvée par exemple dans le document FR2987416. Par ailleurs, les satellites 12 tournent uniquement autour de leur axe de révolution en engrenant sur les dentures internes de la couronne 14, qui est fixée à un rotor de la turbomachine 1. La rotation des satellites 12 autour de leur palier 16, du fait de la coopération de leurs pignons avec les dentures de la couronne 14, entraîne la rotation de la couronne 14 autour de l'axe X, et par conséquent celle de l'arbre de soufflante 4 qui lui est lié, à une vitesse de rotation qui est inférieure à celle de l'arbre basse pression 3. Dans un mécanisme planétaire, la couronne 14, les satellites 12 et le solaire 11 sont donc mobiles par rapport au stator de la turbomachine (par exemple par rapport à la virole interne d'un carter intermédiaire 5, sur laquelle est fixé le porte-satellites 13).

Le solaire 11, les satellites 12 et la couronne 14 forment ensemble les pièces d'engrènement du réducteur 10. Chaque pièce d'engrènement comprend une face amont 21 et une face aval 22 qui s'étendent chacune dans un plan normal à l'axe X, et une face radiale externe 23 qui relie la face amont et la face aval et qui s'étend circonférentiellement autour de l'axe X. Chaque pièce d'engrènement 11, 12, 14 comprend en outre une pluralité de dentures 17. Les dentures 17 peuvent, de manière connue en soi, être droites, hélicoïdales ou en chevrons. On notera que, dans la couronne 14, les dentures 17 s'étendant radialement vers l'intérieur depuis une face radiale interne de la couronne 14, en direction de l'axe X ; dans les satellites 12 et le solaire 11, les dentures 17 s'étendent radialement vers l'extérieur depuis la face radiale externe 23, en s'éloignant de l'axe X.

Le réducteur 10 est logé dans une enceinte E. De manière connue en soi, la turbomachine 1 comprend en outre un système de lubrification comprenant une partie liée à la structure fixe et délivrant de l'huile de lubrification et de refroidissement vers les parties tournantes du réducteur 10 et une partie configurée pour distribuer un fluide (généralement, un mélange air-huile) vers les pièces d'engrènement 11, 12, 14 du réducteur 10. Le document FR3069301 décrit un exemple de système de lubrification.

Afin d'améliorer la marge au grippage du réducteur 10 et la durée de vie des paliers 16, au moins une pièce d'engrènement 11, 12, 14 du réducteur 10 qui est mobile en rotation par rapport au stator de la turbomachine (parties stator 5a,5b/virole interne du carter intermédiaire 5) comprend un premier canal 24 débouchant dans l'une parmi la face amont 21 et la face aval 22, et un deuxième canal 25 débouchant dans sa face radiale 23, sachant que le deuxième canal 25 est en outre raccordé fluidiquement avec le canal axial 24. De la sorte, sous l'effet centrifuge (la pièce d'engrènement 11, 12, 14 étant mobile en rotation), du fluide est susceptible d'entrer dans le premier canal 24 et de ressortir par le deuxième canal 25, permettant ainsi de refroidir la pièce d'engrènement depuis l'intérieur en plus de son refroidissement conventionnel au niveau de sa face radiale 23. La pièce d'engrènement mobile en rotation peut comprendre, comme nous l'avons vu plus haut, le solaire 11, un satellite 12 ou encore la couronne 14 dans le cas d'un mécanisme du type planétaire ou différentiel.

Le premier canal 24 et le deuxième canal 25 permettent ainsi, en utilisant les efforts centrifuges résultant du mouvement rotatif de la pièce, d'améliorer le refroidissement la pièce et donc d'augmenter sa marge au grippage. Par ailleurs, lorsque le premier canal 24 et le deuxième canal 25 sont réalisés dans les satellites 12, la réduction de masse accompagnant la réalisation des canaux 24, 25 permet de réduire le chargement du palier 16 et d'augmenter sa durée de vie (en réduisant les risques de grippage des paliers à éléments roulants et en améliorant le support des paliers lisses 16 grâce au refroidissement du fluide).

Comme nous le verrons dans ce qui suit, le premier canal 24 et le deuxième canal 25 s'étendent chacun suivant des directions sensiblement axiale et radiale, respectivement. Ils seront donc désignés par canal axial 24 et canal radial 25, respectivement, dans la suite de la description. Toutefois, on notera que la direction d'extension du canal axial 24 et/ou du canal radial 25 peut être inclinée par rapport à la direction axiale et/ou radiale.

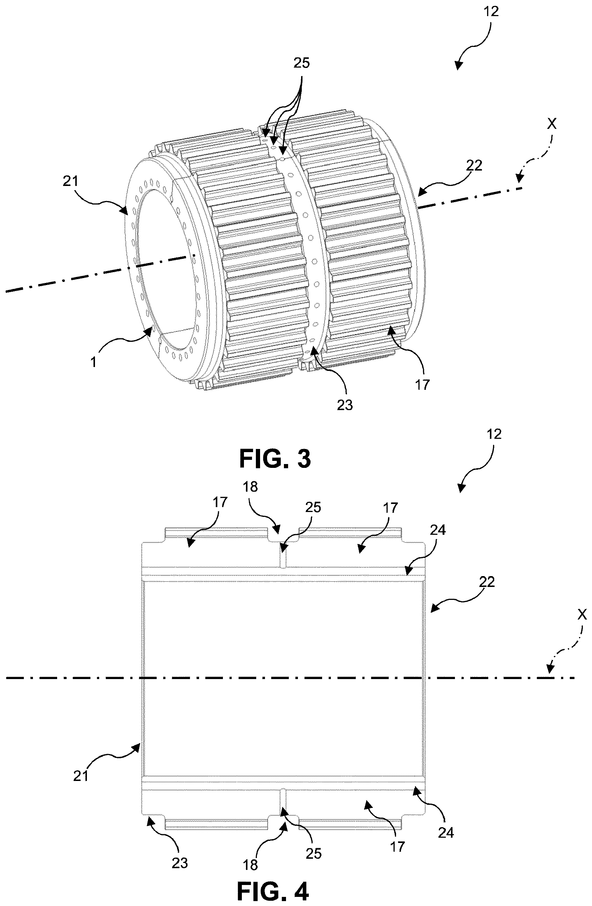

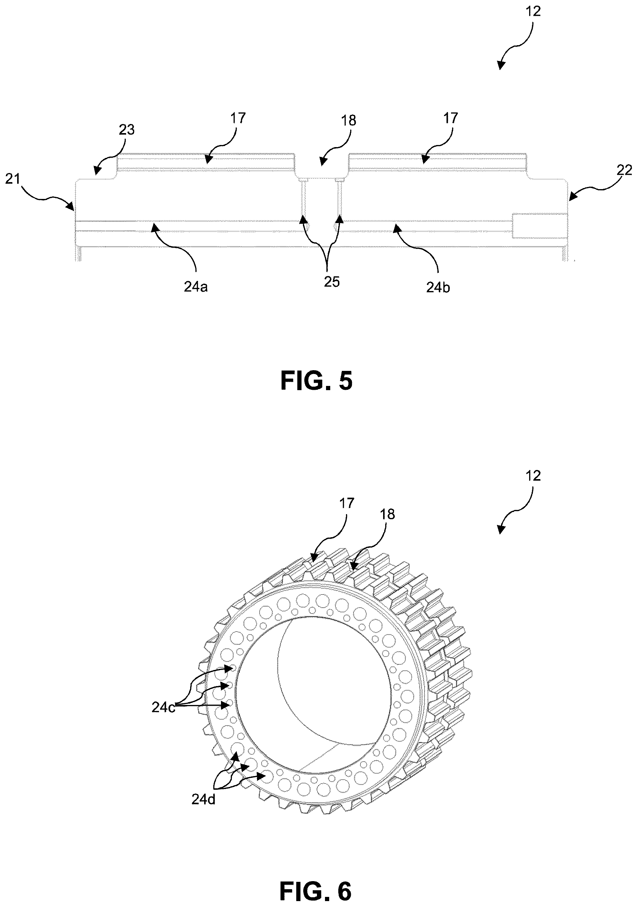

Dans une forme de réalisation, chaque pièce d'engrènement 11, 12, 14 du réducteur 10 comprend deux rangées de dentures 17 coaxiales à l'axe X. Dans les exemples de réalisation illustrés sur les figures 3 et 6, les rangées de dentures 17 ont un diamètre interne (en bas des dents) et externe (en sommet des dents) identiques. Les rangées de dentures 17 sont en outre séparées axialement par une rainure annulaire 18. Afin de simplifier la fabrication des pièces d'engrènement, et notamment la réalisation des canaux radiaux 25, les canaux radiaux 25 débouchent dans la rainure annulaire 18. Cette forme de réalisation permet de limiter la quantité de matière à usiner et améliore la distribution du fluide de lubrification au niveau de la pièce d'engrènement 11, 12, 14.

Dans une variante de réalisation (non illustrée sur les figures), les canaux radiaux 25 peuvent également déboucher dans les dentures 17, de préférence en bas des dentures.

Les canaux axiaux 24 quant à eux sont formés de préférence à proximité des dentures 17. En d'autres termes, les canaux axiaux 24 sont plus proches de la face radiale 23 qui porte les dentures 17 (i.e. la face radiale externe 23, dans le cas des satellites 12 et du solaire 11, interne dans le cas de la couronne 14) que de la face radiale 23 opposée (i.e. la face radiale interne, dans le cas des satellites 12 et du solaire 11, externe 23 dans le cas de la couronne 14).

Le canal radial 25 et le canal axial 24 peuvent par exemple être réalisés par perçage de la pièce d'engrènement 11, 12, 14.

Optionnellement, chaque satellite 12 du réducteur 10, et le cas échéant chaque pièce d'engrènement du réducteur 10 qui est mobile en rotation (satellites 12, solaire 11 et éventuellement la couronne 14, dans le cas d'un mécanisme planétaire), comprend un canal axial 24 et un canal radial 25. Dans ce qui suit, et en relation avec les figures 3 à 8, l'invention va être décrite dans le cas où la pièce d'engrènement comprend un satellite 12. Ceci n'est cependant pas limitatif, l'invention s'appliquant, comme nous venons de le voir, à toute pièce d'engrènement mobile en rotation par rapport au stator 5, 5a, 5b.

Le satellite 12 peut comprendre un canal axial 24 débouchant dans la face amont 21, ou canal amont 24a, et un canal axial 24 débouchant dans la face aval 22, ou canal aval 24b. Le canal radial 25 peut alors être en communication fluidique avec le canal amont 24a et le canal aval 24b (comme illustré en figure 4). En variante, le canal radial 25 peut n'être en communication fluidique qu'avec l'un parmi le canal amont 24a et le canal aval 24b. L'autre parmi le canal amont 24a et le canal aval 24b, qui n'est pas en communication fluidique avec le canal radial 25, participe alors uniquement à la réduction de masse du satellite 12.

Selon une autre variante encore, le satellite 12 peut en outre comprendre un canal radial 25 supplémentaire, le canal radial 25 étant en communication fluidique avec le canal amont 24a et le canal radial 25 supplémentaire étant en communication fluidique avec le canal aval 24b (comme illustré sur la figure 5). De préférence, le canal radial 25 et le canal radial 25 supplémentaire débouchent tous deux dans la rainure annulaire 18.

Dans une forme de réalisation illustrée sur la partie droite de la figure 5, la section de passage (dans un plan normal à l'axe X) du canal axial 24 peut être continue (partie gauche de la figure 5) ou variable (partie droite de la figure 5). Par exemple, la section de passage du canal axial 24 peut être élargie à proximité de la face amont 21 / aval 22 dans laquelle débouche le canal axial 24 afin d'augmenter encore la réduction de masse et d'améliorer le prélèvement de fluide. Dans le cas où le satellite 12 comprend à la fois un canal amont 24a et un canal aval 24b, la section du canal amont 24a et la section du canal aval 24b peuvent être élargies au niveau de la face amont 21 et de la face aval 22, respectivement (non représenté sur les figures).

La section de passage du canal axial 24 est de préférence supérieure à la section de passage (dans un plan tangentiel) du canal radial 25. En effet, la section de passage du canal radial 25 est dictée par l'espace disponible dans la face radiale 23 et les possibilités industrielles de réaliser un canal dans cette zone du satellite 12 (en raison de la présente des dentures 17). A contrario, les contraintes en termes d'encombrement et de faisabilités sont moindres concernant le canal axial 24.

Dans une forme de réalisation, afin d'améliorer encore la marge au grippage et la durée de vie des paliers 16, le satellite 12 comprend une pluralité de canaux axiaux 24 et une pluralité de canaux radiaux 25. De préférence, les canaux axiaux 24 et les canaux radiaux 25 sont équirépartis autour de l'axe X. Le nombre de canaux axiaux 24 peut être égal au nombre de canaux radiaux 25, chaque canal axial 24 étant raccordé fluidiquement à un canal radial 25 associé.

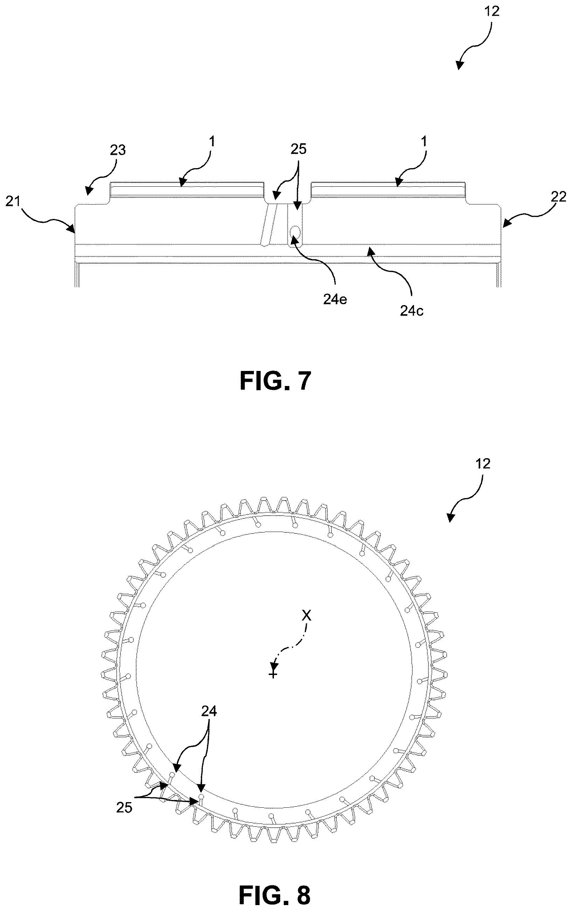

En variante, le nombre de canaux axiaux 24 peut être supérieur au nombre de canaux radiaux 25, chaque canal radial 25 étant raccordé fluidiquement à au moins un canal axial 24, par exemple à un ou deux canaux axiaux 24. Ainsi, on a représenté à titre d'exemple non limitatif sur les figures 6 et 7 un exemple de réalisation dans lequel le canal radial 25 est raccordé fluidiquement à un premier canal axial 24c et à un deuxième canal axial 24d (non visible sur la figure 7 mais en communication via le conduit 24e). Le premier canal axial 24c et le deuxième canal axial 24d peuvent s'étendre dans un même plan radial ou dans des plans radiaux différents (figure 6). Le premier et le deuxième canal axial 24c, 24d peuvent avoir une même section de passage ou une section de passage différente (figure 6).

Selon une autre variante encore, le nombre de canaux radiaux 25 peut être inférieur au nombre de canaux axiaux 24, plusieurs canaux radiaux 25 étant alors raccordés fluidiquement à un même canal axial 24.

Comme cela a été précisé plus haut, le canal axial 24 s'étend suivant une direction sensiblement axiale. Ainsi, le canal axial 24 peut s'étendre suivant une direction qui est parallèle à l'axe X (figures 3-8). En variante, le canal axial 24 peut s'étendre suivant une direction qui n'est pas parallèle à l'axe X : à titre d'exemple, le canal axial 24 peut être incliné dans la direction tangentielle (suivant le sens de rotation du satellite 12 ou le sens inverse) et/ou vers l'amont ou vers l'aval.

Le canal radial 25 s'étend quant à lui suivant une direction sensiblement radiale par rapport à l'axe X. Ainsi, le canal radial 25 peut s'étendre suivant une direction qui est radiale par rapport à l'axe X (figures 3-6 et canal radial 25 à droite de la figure 7). En variante, le canal radial 25 peut s'étendre sensiblement radialement en étant incliné dans la direction tangentielle (suivant le sens de rotation du satellite 12 ou le sens inverse - figure 8) et/ou vers l'amont ou vers l'aval (canal radial 25 à gauche de la figure 7.

De plus, il peut être noté que tous les satellites 12 peuvent être identiques et comprendre un même nombre de canaux axiaux 24 et de canaux radiaux 25, de forme et d'orientation identiques. En variante, les satellites 12 peuvent comprendre un nombre de canaux axiaux 24 et radiaux différents et/ou de forme et/ou d'orientation différentes. De même, le solaire 11 et/ou la couronne 14 (lorsqu'elle est mobile) peuvent également comprendre un nombre, des orientations et/ou des formes de canal radial 25 et axial identiques ou différents.

Le réducteur 10 mécanique peut être composé d'un ou plusieurs étages d'engrènement. Comme nous l'avons vu plus haut, le réducteur 10 mécanique peut par ailleurs être du type épicycloïdal, planétaire ou différentiel.

Le porte-satellites 13 peut être monobloc ou comprendre une cage et un porte cage.

Le réducteur 10 mécanique est par ailleurs compatible avec des paliers hydrodynamiques ou des paliers à éléments roulants.

## Revendications

1. Réducteur (10) mécanique pour une turbomachine configuré pour entrainer une soufflante (S), le réducteur (10) mécanique étant configuré pour être monté fixement par rapport à un stator (5, 5a, 5b) de la turbomachine et comprenant une pluralité de pièces d'engrènement (11, 12, 14), lesdites pièces d'engrènement (11, 12, 14) comprenant :
- un solaire (11), centré sur un axe (X) principal du réducteur (10) mécanique,
- une couronne (14), centrée sur l'axe (X) principal du réducteur (10) mécanique, et
- au moins trois satellites (12) coopérant avec le pignon solaire (11) et la couronne (14),
chaque pièce d'engrènement (11, 12, 14) présentant une face amont (21) et une face aval (22) chacune perpendiculaire à l'axe (X) principal et une face radiale externe (23) qui relie la face amont (21) et la face aval (22) et qui s'étend circonférentiellement autour de l'axe (X) principal, au moins une pièce d'engrènement (11, 12, 14) du réducteur (10) mécanique qui est mobile en rotation par rapport au stator (5, 5a, 5b) comprenant un premier canal (24, 24a, 24b, 24c, 24d) débouchant dans l'une parmi la face amont (21) et la face aval (22) de la pièce d'engrènement (11, 12, 14) et un deuxième canal (25) raccordé fluidiquement avec le premier canal (24, 24a, 24b, 24c, 24d) et débouchant dans la face radiale externe (23) de la pièce d'engrènement (11, 12, 14), le réducteur (10) mécanique étant **caractérisé en ce que** le premier canal (24, 24a, 24b, 24c, 24d) présente une section de passage variable, la section de passage étant plus grande à proximité de l'une parmi la face amont (21) et la face aval (22) qu'à proximité du deuxième canal (25), et **en ce que** chaque pièce d'engrènement (11, 12, 14) comprend deux rangées de dentures (17) qui sont coaxiales avec l'axe (X) principal et séparées axialement par une rainure annulaire (18), le deuxième canal (25) débouchant dans la rainure annulaire (18).

2. Réducteur (10) mécanique selon la revendication 1, dans lequel l'au moins une pièce d'engrènement (11, 12, 14) comprend une pluralité de premiers canaux (24a, 24b, 24c, 24d) débouchant dans l'une parmi la face amont (21) et la face aval (22) de la pièce d'engrènement (11, 12, 14) et une pluralité de deuxièmes canaux (25), chaque deuxième canal (25) débouchant dans la face radiale externe (23) de la pièce d'engrènement (11, 12, 14) et étant raccordé fluidiquement avec un premier canal (24a, 24b, 24c, 24d) correspondant.

3. Réducteur (10) mécanique selon la revendication 2, dans lequel l'au moins une pièce d'engrènement (11, 12, 14) comprend au moins deux premiers canaux (24c, 24d) décalés radialement par rapport à l'axe (X) principal, un deuxième canal (25) étant raccordé fluidiquement avec les au moins deux premiers canaux (24a, 24b).

4. Réducteur (10) mécanique selon l'une des revendications 2 et 3, dans lequel les premiers canaux (24, 24a, 24b, 24c, 24d) et les deuxièmes canaux (25) sont équirépartis autour de l'axe (X) principal.

5. Réducteur (10) mécanique selon l'une des revendications 1 à 4, dans lequel chaque satellite (12) comprend un premier canal (24, 24a, 24b, 24c, 24d) et un deuxième canal (25), de préférence chaque pièce d'engrènement (11, 12, 14) du réducteur (10) mécanique qui est mobile en rotation comprend un premier canal (24, 24a, 24b, 24c, 24d) et un deuxième canal (25).

6. Réducteur (10) mécanique selon l'une des revendications 1 à 5, comprenant en outre un premier canal supplémentaire (24b) débouchant dans l'autre parmi la face amont (21) et la face aval (22), et un deuxième canal (25) supplémentaire débouchant dans la face radiale externe (23), le deuxième canal (25) supplémentaire étant en communication fluidique avec le premier canal (24) supplémentaire.

7. Réducteur (10) mécanique selon l'une des revendications 1 à 6, dans lequel le premier canal (24, 24c, 24d) débouche à la fois dans la face amont (21) et dans la face aval (22).

8. Réducteur (10) mécanique selon l'une des revendications 1 à 7, dans lequel :
- le premier canal (24, 24a, 24b, 24c, 24d) s'étend selon une direction axiale qui est parallèle à l'axe (X) principal, et/ou
- le deuxième canal (25) s'étend selon une direction radiale à l'axe (X) principal, dans un plan normal à l'axe (X) principal, et peut être incliné suivant une direction tangentielle perpendiculaire à l'axe (X) principal et à la direction radiale.

9. Turbomachine (1) comprenant une soufflante (S) et un réducteur (10) mécanique selon l'une des revendications 1 à 8, la soufflante (S) étant accouplée en rotation autour de l'axe (X) avec le réducteur (10).

10. Aéronef comprenant une turbomachine (1) selon la revendication 9.

## Patentansprüche

1. Mechanisches Untersetzungsgetriebe (10) für ein Turbinentriebwerk, das konfiguriert ist, um ein Gebläse (S) anzutreiben, wobei das mechanische Untersetzungsgetriebe (10) konfiguriert ist, um in Bezug auf einen Stator (5, 5a, 5b) des Turbinentriebwerks fest angebracht zu sein und eine Vielzahl von Eingreifteilen (11, 12, 14) umfasst, wobei die Eingreifteile (11, 12, 14) umfassen:
- ein Sonnenrad (11), das auf einer Hauptachse (X) des mechanischen Untersetzungsgetriebes (10) zentriert ist,
- eine Krone (14), die auf der Hauptachse (X) des mechanischen Untersetzungsgetriebes (10) zentriert ist, und
- mindestens drei Planetenräder (12), die mit dem Sonnenrad (11) und der Krone (14) zusammenwirken,
wobei jedes Eingreifteil (11, 12, 14) eine stromaufwärtige Fläche (21) und eine stromabwärtige Fläche (22) jeweils senkrecht zur Hauptachse (X) und eine radial äußere Fläche (23) aufweist, die die stromaufwärtige Fläche (21) und die stromabwärtige Fläche (22) verbindet und die sich umfangsmäßig um die Hauptachse (X) erstreckt,
wobei mindestens ein Eingreifteil (11, 12, 14) des mechanischen Untersetzungsgetriebes (10), das in Bezug auf den Stator (5, 5a, 5b) drehbeweglich ist, einen ersten Kanal (24, 24a, 24b, 24c, 24d), der in eine von der stromaufwärtigen Fläche (21) und der stromabwärtigen Fläche (22) des Eingreifteils (11, 12, 14) mündet, und einen zweiten Kanal (25), der mit dem ersten Kanal (24, 24a, 24b, 24c, 24d) fluidisch verbunden ist und in die radial äußere Fläche (23) des Eingreifteils (11, 12, 14) mündet, umfasst, wobei das mechanische Untersetzungsgetriebe (10) **dadurch gekennzeichnet ist, dass** der erste Kanal (24, 24a, 24b, 24c, 24d) einen variablen Durchlassquerschnitt aufweist, wobei der Durchlassquerschnitt in der Nähe von einer von der stromaufwärtigen Fläche (21) und der stromabwärtigen Fläche (22) größer ist als in der Nähe des zweiten Kanals (25), und dass jedes Eingreifteil (11, 12, 14) zwei Zahnreihen (17) umfasst, die koaxial zur Hauptachse (X) sind und axial durch eine ringförmige Nut (18) getrennt sind, wobei der zweite Kanal (25) in die ringförmige Nut (18) mündet.

2. Mechanisches Untersetzungsgetriebe (10) nach Anspruch 1, wobei das mindestens eine Eingreifteil (11, 12, 14) eine Vielzahl erster Kanäle (24a, 24b, 24c, 24d), die in eine von der stromaufwärtigen Fläche (21) und der stromabwärtigen Fläche (22) des Eingreifteils (11, 12, 14) münden, und eine Vielzahl zweiter Kanäle (25) umfasst, wobei jeder zweite Kanal (25) in die radial äußere Fläche (23) des Eingreifteils (11, 12, 14) mündet und mit einem entsprechenden ersten Kanal (24a, 24b, 24c, 24d) fluidisch verbunden ist.

3. Mechanisches Untersetzungsgetriebe (10) nach Anspruch 2, wobei das mindestens eine Eingreifteil (11, 12, 14) mindestens zwei erste Kanäle (24c, 24d) umfasst, die in Bezug auf die Hauptachse (X) radial versetzt sind, wobei ein zweiter Kanal (25) mit den mindestens zwei ersten Kanälen (24a, 24b) fluidisch verbunden ist.

4. Mechanisches Untersetzungsgetriebe (10) nach einem der Ansprüche 2 und 3, wobei die ersten Kanäle (24, 24a, 24b, 24c, 24d) und die zweiten Kanäle (25) gleichmäßig um die Hauptachse (X) verteilt sind.

5. Mechanisches Untersetzungsgetriebe (10) nach einem der Ansprüche 1 bis 4, wobei jedes Planetenrad (12) einen ersten Kanal (24, 24a, 24b, 24c, 24d) und einen zweiten Kanal (25) umfasst, wobei vorzugsweise jedes Eingreifteil (11, 12, 14) des mechanischen Untersetzungsgetriebes (10), das drehbeweglich ist, einen ersten Kanal (24, 24a, 24b, 24c, 24d) und einen zweiten Kanal (25) umfasst.

6. Mechanisches Untersetzungsgetriebe (10) nach einem der Ansprüche 1 bis 5, das ferner einen ersten zusätzlichen Kanal (24b) umfasst, der in die andere von der stromaufwärtigen Fläche (21) und der stromabwärtigen Fläche (22) mündet, und einem zweiten zusätzlichen Kanal (25), der in die radial äußere Fläche (23) mündet, wobei der zweite zusätzliche Kanal (25) in Fluidverbindung mit dem ersten zusätzlichen Kanal (24) ist.

7. Mechanisches Untersetzungsgetriebe (10) nach einem der Ansprüche 1 bis 6, wobei der erste Kanal (24, 24c, 24d) zugleich in die stromaufwärtige Fläche (21) und in die stromabwärtige Fläche (22) mündet.

8. Mechanisches Untersetzungsgetriebe (10) nach einem der Ansprüche 1 bis 7, wobei:
- sich der erste Kanal (24, 24a, 24b, 24c, 24d) in einer axialen Richtung erstreckt, die parallel zur Hauptachse (X) ist, und/oder
- sich der zweite Kanal (25) in einer radialen Richtung zur Hauptachse (X) in einer Normalebene zur Hauptachse (X) erstreckt und gemäß einer tangentialen Richtung senkrecht zur Hauptachse (X) und zur radialen Richtung geneigt sein kann.

9. Turbinentriebwerk (1), umfassend ein Gebläse (S) und ein mechanisches Untersetzungsgetriebe (10) nach einem der Ansprüche 1 bis 8, wobei das Gebläse (S) mit dem Untersetzungsgetriebe (10) um die Achse (X) drehbar gekoppelt ist.

10. Luftfahrzeug, umfassend ein Turbinentriebwerk (1) nach Anspruch 9.

## Claims

1. A mechanical reduction gear (10) for a turbomachine configured to drive a fan (S), the mechanical reduction gear (10) being configured to be fixedly mounted with respect to a stator (5, 5a, 5b) of the turbomachine and comprising a plurality of meshing parts (11, 12, 14), said meshing parts (11, 12, 14) comprising:
- a sun gear (11), centered on a main axis (X) of the mechanical reduction gear (10),
- a ring gear (14), centered on the main axis (X) of the mechanical reduction gear (10), and
- at least three planet gears (12) cooperating with the sun gear (11) and the ring gear (14),
each meshing part (11, 12, 14) having an upstream face (21) and a downstream face (22) each perpendicular to the main axis (X) and an outer radial face (23) which connects the upstream face (21) and the downstream face (22) and extends circumferentially around the main axis (X),
at least one meshing part (11, 12, 14) of the mechanical reduction gear (10) which is rotatable relative to the stator (5, 5a, 5b) comprising a first channel (24, 24a, 24b, 24c, 24d) opening into one of the upstream face (21) and the downstream face (22) of the meshing part (11, 12, 14) and a second channel (25) fluidically connected with the first channel (24, 24a, 24b, 24c, 24d) and opening into the radially outer face (23) of the meshing part (11, 12, 14), the mechanical reduction gear (10) being **characterized in that** the first channel (24, 24a, 24b, 24c, 24d) has a variable passage cross-section, the passage cross-section being greater in the vicinity of one of the upstream face (21) and the downstream face (22) than in the vicinity of the second channel (25), and **in that** each meshing part (11, 12, 14) comprises two rows of teeth (17) which are coaxial with the main axis (X) and separated axially by an annular groove (18), the second channel (25) opening into the annular groove (18).

2. A mechanical reduction gear (10) according to claim 1, in which the at least one meshing part (11, 12, 14) comprises a plurality of first channels (24a, 24b, 24c, 24d) opening into one of the upstream face (21) and the downstream face (22) of the meshing part (11, 12, 14) and a plurality of second channels (25), each second channel (25) opening into the radially outer face (23) of the meshing part (11, 12, 14) and being fluidly connected with a corresponding first channel (24a, 24b, 24c, 24d).

3. A mechanical reduction gear (10) according to claim 2, wherein the at least one meshing part (11, 12, 14) comprises at least two first channels (24c, 24d) radially offset with respect to the main axis (X), a second channel (25) being fluidly connected with the at least two first channels (24a, 24b).

4. Mechanical reduction gear (10) according to one of claims 2 and 3, in which the first channels (24, 24a, 24b, 24c, 24d) and the second channels (25) are equally spaced around the main axis (X).

5. Mechanical reduction gear (10) according to one of claims 1 to 4, wherein each planet gear (12) comprises a first channel (24, 24a, 24b, 24c, 24d) and a second channel (25), preferably each gear-engaging part (11, 12, 14) of the mechanical reduction gear (10) which is rotatable comprises a first channel (24, 24a, 24b, 24c, 24d) and a second channel (25).

6. A mechanical reduction gear (10) according to one of claims 1 to 5, further comprising a first additional channel (24b) opening into the other of the upstream face (21) and the downstream face (22), and a second additional channel (25) opening into the radially outer face (23), the second additional channel (25) being in fluid communication with the first additional channel (24).

7. Mechanical reduction gear (10) according to one of claims 1 to 6, in which the first channel (24, 24c, 24d) opens into both the upstream face (21) and the downstream face (22).

8. Mechanical reduction gear (10) according to one of claims 1 to 7, wherein:
- the first channel (24, 24a, 24b, 24c, 24d) extends in an axial direction which is parallel to the main axis (X), and/or
- the second channel (25) extends in a radial direction to the main axis (X), in a plane normal to the main axis (X), and can be inclined along a tangential direction perpendicular to the main axis (X) and to the radial direction.

9. Turbomachine (1) comprising a fan (S) and a mechanical reduction gear (10) according to one of claims 1 to 8, the fan (S) being coupled in rotation about the axis (X) with the mechanical reduction gear (10).

10. Aircraft comprising a turbomachine (1) according to claim 9.
